(19) Europäisches Patentamt
European Patent Office
Office européen des brevets

(11) Publication number: **0 191 226 B1**

(12) # EUROPEAN PATENT SPECIFICATION

(45) Date of publication of patent specification: **27.02.91**

(51) Int. Cl.5: **G11B 13/04**, G11B 11/10, G11B 5/64, H01F 10/16

(21) Application number: **85307958.0**

(22) Date of filing: **01.11.85**

The file contains technical information submitted after the application was filed and not included in this specification

(54) **Rewritable magneto-optical disc.**

(30) Priority: **14.02.85 JP 26741/85**
**30.09.85 JP 214506/85**

(43) Date of publication of application:
**20.08.86 Bulletin 86/34**

(45) Publication of the grant of the patent:
**27.02.91 Bulletin 91/09**

(84) Designated Contracting States:
**DE FR GB NL**

(56) References cited:
**EP-A- 0 049 821**
**EP-A- 0 111 988**
**EP-A- 0 157 664**

**8th Nippon Oyo Jiki Gakkai Gakujutsu Koen Yokoshu 14aB-11, November 1984**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Ichihara, Katsutarou c/o Patent Division**
**Kabushiki Kaisha Toshiba 1-1 Shibaura 1-chome**
**Minato-ku Tokyo 105(JP)**
Inventor: **Yasuda, Nobuaki c/o Patent Division**
**Kabushiki Kaisha Toshiba 1-1 Shibaura 1-chome**
**Minato-ku Tokyo 105(JP)**
Inventor: **Taira, Kozo c/o Patent Division**
**Kabushiki Kaisha Toshiba 1-1 Shibaura 1-chome**
**Minato-ku Tokyo 105(JP)**
Inventor: **Kobori, Hiromichi c/o Patent Division**
**Kabushiki Kaisha Toshiba 1-1 Shibaura 1-chome**
**Minato-ku Tokyo 105(JP)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

Inventor: **Terashima, Yoshiaki c/o Patent Division**
**Kabushiki Kaisha Toshiba 1-1 Shibaura 1-chome**
**Minato-ku Tokyo 105(JP)**
Inventor: **Shimanuki, Senji c/o Patent Division**
**Kabushiki Kaisha Toshiba 1-1 Shibaura 1-chome**
**Minato-ku Tokyo 105(JP)**

(74) Representative: **Freed, Arthur Woolf et al**
**MARKS & CLERK 57-60 Lincoln's Inn Fields**
**London WC2A 3LS(GB)**

## Description

The present invention relates to a rewritable magneto-optical disc comprising, as a recording layer, a thin amorphous alloy film made of rare-earth-transition metals having an axis of easy magnetization perpendicular to a substrate surface.

A thin amorphous alloy film made of rare-earth-transition metals (to be referred to as an RE-TM film for brevity) has the following advantages. (a) A perpendicular magnetic film can be formed on an inexpensive substrate by film forming methods which allow for easy industrial application, e.g., a sputtering method or a vacuum deposition method. (b) Record/erase can be performed by irradiation of the film with low power light beams from a systematically advantageous semiconductor laser. (c) Since it is an amorphous film, a recording bit having the same shape as that of a spot of the recording laser beam, and no grain boundary noise, can be formed. Therefore, an RE-TM film is considered most promising as the recording layer material of a rewritable magneto-optical disc, and extensive studies are being made for development.

The above advantages (a) to (c) are common to RE-TM films containing Gd, Tb, Dy or Ho as a rare-earth element (RE) and Fe or Co as a transition metal element (TM) . More specifically, however, memory characteristics of RE-TM films depend largely upon the combinations of RE and TM. An RE-TM film containing Dy and Ho as major components of RE has an insufficient Kerr rotation angle with respect to a reproduction signal, and has no practical advantages as the recording layer of a magnetooptical disc. Therefore, descriptions will be made by limiting rare-earth elements to GD and Tb, and transition metal elements to Fe and Co hereinafter.

Major RE-TM film materials developed as a recording layer in a rewritable magneto-optical disc include Gd-Co, Gd-Tb-Co (the ratio of Tb in Gd-Tb is 30 at.% or less), Tb-Fe, Tb-Fe-Co (the ratio of Co in Fe-Co is 15 at.% or less), Gd-Tb-Fe and the like. When these materials are used, the following drawbacks occur. For example, while Tb-Fe, Tb-Fe-Co and Gd-Tb-Fe have a Curie temperature of about 150°C to 250°C, which is advantageous to record/erase characteristics, they have, on account of their containing Fe as a major component, a short storage period, this being a disadvantage with respect to a memory, where a long storage period is an importart requirement.

In a magneto-optical disc using, as a recording layer, a material containing Fe as a major component of TM, an antioxide film for preventing oxidation of Fe can be formed as a protective layer in order to realize a practical memory lifetime. However, as will be described later, the manufacturing process is complicated.

As described above, the RE-TM film can be formed by methods which allow for easy industrial application such as a sputtering method or a vacuum deposition method. In order to utilize this advantage, a dry process such as a sputtering method or a vacuum deposition method must be utilized to form an antioxide film after the RE-TM film is formed. Furthermore, in order to prevent crystallization of the RE-TM film, the antioxide film must be formed while maintaining a substrate at a temperature lower than the crystallization temperature of the RE-TM film. However, it is difficult to form a high quality antioxide film, without pinholes, by sputtering or vacuum deposition while keeping the substrate at a low temperature. For this reason, a wet process must be used. However, in this case, a molding member is required, complicating the antioxide film forming process.

Furthermore, formation of such an antioxide film results in increased cost of a disc. A transparent resin material consisting of, e.g., acryl or polycarbonate is used as a substrate because of allowing easy formation of a tracking guide groove for an optical head guide. In this case, if the recording layer contains Fe, oxidation of Fe due to exposure of the substrate to outer air is a problem, because the resin materials easily transport atmosphere and easily absorb moisture. In order to prevent oxidation, an antioxide film may be formed between the substrate and the RE-TM film. However, in order for recording/reproduction light beams incident on the substrate to reach the RE-TM film, the antioxide film must have an optical function. Therefore, a magneto-optical disc having, as a recording layer, an RE-TM film containing Fe as a major component has various major problems. These problems will be apparent from the results of experiments conducted by the present inventors.

Meanwhile, since no Fe is used as TM in Gd-Co and Gd-Tb-Co films, a practical lifetime can be obtained by providing an antioxide film formed by low temperature sputtering. However, a perpendicular magnetic recording layer cannot be obtained by a vacuum deposition method. Such a film can only be obtained by a biased sputtering method which causes an excessive heat load to be applied to the substrate. Therefore, when a resin substrate of practical advantage is used, application of an undue heat load to the substrate becomes a problem. Furthermore, the original coercive force of the RE-TM films near a normal temperature is insufficient to hold a recording bit stably, other than in a very limited composition range near a compensation composition. Therefore, it is difficult to form a recording layer of uniform characteristics on a substrate with a large area.

In this manner, the conventional RE-TM film developed as a recording layer of a rewritable magneto-optical disc cannot, at the same time, satisfy the following requirements: ① a long storage life, ② use of a resin substrate, and ③ formation of a recording layer having uniform characteristics on a large-sized substrate, thus posing major problems for practical use.

In order to resolve the above problems of the conventional RE-TM film, the present inventors have proposed a Tb-Co film using Co having an antioxidant property as TM, and Tb as RE (8th Nippon Oyo Jiki Gakkai Gakujutsu Koen Yokoshu 14aB-11, November, 1984). This RE-TM film is a perpendicular magnetic film which can be formed by a non-biased sputtering method or a vacuum deposition method imparting a low heat load to the substrate, and which has a sufficient coercive force near a normal temperature. In this particular report, the composition, film thickness and optimum disc structure of the Tb-Co film are not examined in detail.

EP-A-0111988 discloses a rewritable magneto-optical disc in which information is written by a recording light beam and from which information is reproduced by a reproduction light beam. The disc comprises a substrate, and a recording layer formed on the substrate and made of an amorphous alloy of rare earth transition metal elements having an axis of easy magnetization perpendicular to a substrate surface. An interference layer is formed on the recording layer and is made of a material which is transparent with respect to the wavelength of the recording and reproduction light beams. A light reflection layer is formed on the interference layer.

It is an object of the present invention to provide a rewritable magneto-optical disc having a good antioxidation property, a long life, and excellent characteristics.

According to the present invention, there is provided a rewritable magneto-optical disc, in which information is written by a recording laser beam and from which the information is reproduced by a reproduction laser beam, said recording and reproduction laser beams having the same spot size, the disc comprising a substrate; a recording layer formed on said substrate and made of an amorphous alloy of rare earth transition metal elements having an axis of easy magnetization perpendicular to a substrate surface; and a protective layer formed on said recording layer for protection of said recording layer and comprising an interference layer formed on said recording layer and made of a material which is transparent with respect to the wavelength of the recording/reproduction laser beams; and a light reflection layer formed on said interference layer; characterized in that the rare earth element in said recording layer is Tb and the transition metal element therein is Co, and the content of Tb in said recording layer falls within a range between 21 atomic % and 30 atomic %, in that the film thickness of said recording layer falls within a range between 100 Å and 400 Å, and in that the light reflection layer has reflectivity of at least 80% with respect to the wavelength of the recording/reproducing laser beams.

According to the present invention, since a Tb-Co film constituting a recording layer contains Co, which has a good antioxidation property, as TM, it has a very long lifetime as compared to a layer containing Fe as a chief element. Unlike other RE-TM films using Co as TM, e.g., a Gd-Co film, a perpendicular magnetic film can be easily formed by a non-biased sputtering method or a vacuum deposition method imparting only a low heat load to the substrate. Therefore, if the Tb-Co film is used, a resin substrate preferable in practical use, can be used. Furthermore, since a perpendicular magnetic film having sufficient coercive force can be obtained within a wide content range of Tb, a uniform recording film can be easily formed on a large-sized substrate for practical use.

Furthermore, according to the present invention, in addition to the above essential advantages of the Tb-Co film, a recording bit equivalent to a spot size of the light beam can be stably formed by irradiation of the film with a low power light beam and application of a relatively low auxiliary magnetic field. In other words, the magneto-optical disc of the present invention has high recording stability and sensitivity, and excellent dynamic characteristics.

Embodiments will now be described with reference to the accompanying drawings, in which:

Fig. 1 is a sectional view of a magneto-optical disc according to an embodiment of the present invention;

Fig. 2 is a schematic view of an apparatus for manufacturing the magneto-optical disc of the present invention;

Fig. 3 is a graph showing the rate at which film reflectivity is lowered with respect to the time during which magneto-optical discs having various RE-TM films as recording layers are exposed to 70°C-80%R.H.;

Fig. 4 is a microphotograph showing the texture of the metal in a surface of a conventional Tb-Fe film after an anticorrosion test;

Figs. 5A to 5C are microphotographs showing metal textures in surfaces of magneto-optical discs having Tb-Co, Tb-($Fe_{80}Co_{20}$) and Tb-Fe films as recording layers after the anticorrosion test, respectively;

Fig. 6 is a graph showing the film temperature at which a coercive force becomes 1 KOe or lower in the magneto-optical discs having Tb-Co, Tb-($Fe_{50}Co_{50}$) and Tb-($Fe_{20}Co_{80}$) films as recording layers;

Fig. 7 is a graph showing the relationship between a composition of the recording layer and a coercive force at the normal temperature of the magneto-optical discs having Tb-Co, Gd-Co and ($Gd_{80}Tb_{20}$)-Co films as recording layers;

Fig. 8 is a graph showing a coercive force Hc, an external magnetic field for obtaining a saturated Kerr rotation angle HR, and Hc/HR in magneto-optical discs having two types of Tb rich and Co rich Tb-Co films as recording layers, with respect to a film temperature of the recording layer;

Fig. 9 is a graph showing the relationship between a film temperature and a coercive force of magneto-optical discs having Tb-Co films of various compositions as recording layers;

Fig. 10 is a graph showing a reflectivity, a transmittance, and a Kerr rotation angle with respect to the film thickness of a magneto-optical disc having a Tb-Co film as a recording layer; and

Fig. 11 is a graph showing the relationship between a film temparature and a Kerr rotation angle of magneto-optical discs having Tb-Co, Tb-Fe and Tb-Fe-Co films as recording layers.

A magneto-optical disc according to an embodiment of the present invention will be described with reference to Fig. 1.

A substrate 10 is a resin substrate comprising, e.g., an acrylic plate having a tracking guide groove for guiding an optical head. A first interference film layer 12 is formed on the substrate 10, and an amorphous Tb-Co film is formed on the film 12 as a recording layer 14. The Tb-Co film has an axis of easy magnetization perpendiculer to the substrate 10. A second interference layer 16 and a light reflection layer 18 are sequentially formed on the layer 14. The layers 16 and 18 constitute a protective layer 20 for the layer 14.

The layers 12 and 16 are made of $Si_3N_4$ sputter films, and the layer 18 is made of an Aℓ sputtered film.

The Tb-Co film forming process of the magneto-optical disc will be explained with reference to Fig. 2. An apparatus shown in Fig. 2 is used for forming the Tb-Co perpendicular magnetic film of the present invention. A magnetron sputter gun 32 storing a Tb target, a magnetron sputter gun 34 storing a Co target, a shutter 36 arranged above the gun 32, and a shutter 38 arranged above the gun 34 are provided on a portion of the bottom of a sputter chamber 30. The substrate 10 is arranged at an upper portion of the chamber 30. The guns 32 and 34 are connected to DC power supplies 40 and 42, respectively. The substrate 10 is coupled to an R.F. power supply 44 through a capacitor. The chamber 30 is connected to a vacuum pump 46 comprising a cryopump. Furthermore, the chamber 30 is connected to a gas cylinder 52 storing Ar gas having a purity of 99.9995% or higher through a mass flowmeter 48 and a pressure regulator 50.

By using the above-mentioned apparatus, the Tb-Co film of the present invention was formed in the following manner. The chamber 30 was evacuated to 1.33 x $10^{-3}$ Pa (1 x $10^{-5}$ Torr) by the pump 46. Then, the mass flowmeter 48 and the pressure regulator 50 were adjusted so that the Ar gas in the cylinder 52 flowed into the chamber 30 at a flow rate of 70 sccm. Gas pressure in the chamber 30 was maintained at 0.665 Pa (5 mTorr) by adjusting a valve of the pump 46. Power was supplied to the guns 32 and 34 from the supply sources 40 and 42 while the shutters 36 and 38 were closed, so as to excite a magnetron discharge on the Tb and Co target surfaces. Input currents were set at 0.4 A for the Tb target and 1.4 A for the Co target, respectively. At the input currents, pre-sputter for five minutes was performed so as to clean the Tb and Co target surfaces. Thereafter, the shutters 36 and 38 were simultaneously opened, and formation of the Tb-Co film on the rotating substrate 10 was performed for three minutes. The rotational speed of the substrate 10 was set to be 60 rpm such that Tb and Co sputter particles were sufficiently mixed on the substrate 10. In this case, the substrate 10 was kept at the ground potential. The above-mentioned magnetron sputtering method is schematically disclosed in, e.g., "Thin Film Processes", Academic Press, 1978 by Vossen.

The substrate 10 may be kept at any potential between 0 to -150 V during the period of Tb-Co film formation. The sputter gas during the magnetron sputtering may include rare gas having a partial pressure ratio of more than 96% and the pressure thereof may be 10 mtorr or less.

The following experiments were conducted so as to check the performance of the magneto-optical disc having the Tb-Co film manufactured in the above manner.

Test Example 1

In Test Example 1, results of experiments which were conducted so as to evaluate antioxidation properties of various RE-TM film materials will be described. It has been qualitatively reported in "Anticorrosion Property of Tb-Fe- and Tb-Co-based Amorphous Thin Films", 1984 Shunki Oyo Rengo Koen Yokoshu 29-p-J-2, p.345, that an RE-TM film containing Co as a major component of TM was outstanding in antioxidation property compared with a film containing Fe as a major component. Therefore, the present inventors conducted quantitative lifetime evaluation for a Tb-Fe-Co perpendicular magnetic film using Fe, $Fe_{80}$-$Co_{20}$, F $e_{50}$-$Co_{50}$, and Co (suffixes are atomic ratios of Fe or Co contained in the transition metal content), and a ($Gd_{80}Tb_{20}$)-Co perpendicular magnetic film. Then, the present inventors evaluated the lifetime of a recording medium in which an antioxide film was formed on the Tb-Fe, Tb-($Fe_{80}Co_{20}$) and Tb-Co films by sputtering. These results will be described hereinafter.

1,000Å thick RE-TM films were formed as samples by sputtering on glass substrates, each having a side of 5 cm and a thickness of 1.5 mm, and the thus formed samples were exposed in a temperature/humidity regulator chamber in which temperature and humidity were maintained at 70°C and 85%R.H. (Relative Humidity), respectively. The samples were then removed from the chamber, and the film reflectivity with respect to a wavelength of 830 nm (relative value with respect to an Aℓ deposition film) was measured by a Cary 17. Fig. 3 shows the evaluation results. Since reproduction is performed by utilizing reflected light in a magneto-optical recording medium having an RE-TM film as a recording layer, reflectivity is a very important factor. Only an RE-TM film having a slight change in reflectivity over a long period of time can be regarded as having a practical lifetime.

As is apparent from Fig. 3, the Tb-Co film according to the present invention exhibits the least degradation in light reflectivity among the RE-TM films subjected to lifetime evaluation, the ($Gd_{80}Tb_{20}$)-Co and Tb-($Fe_{50}Co_{50}$) films were next, and the Tb-($Fe_{80}Co_{20}$) and Tb-Fe films exhibit the worst degradation in reflectivity. As for the Tb-($Fe_{80}Co_{20}$) and the Tb-Fe films, it was found that after exposure to an atmosphere of 70°C and 85%R.H. for 40 and 10 hours, respectively, obviously corroded portions were present on film surfaces, and oxidation progressed in a direction of film thickness measuring 1,000 Å. Fig. 4 is a photograph showing the texture of the metal of a surface of the Tb-Fe film after exposure in an atmosphere of 70°C and 85%R.H. for 10 hours. In this photograph, it was confirmed by Auger electron spectroscopy that a branched, blackened portion was oxidized over the entire direction of film thickness.

As will be understood from Fig. 3, the lifetime of the Tb-Co film, and those of the Tb-Fe-Co film having a ratio of Co in TM of 50 at.% and the Gd-Tb-Co film are considerably longer than that of Fe-based films.

Figs. 5A to 5C are photographs showing the textures of the metal of surfaces of samples obtained after the following procedures. 1,000Å thick Tb-Co, Tb-($Fe_{80}Co_{20}$) and Tb-Fe films were formed on glass substrates, each having a side of 5 cm and a thickness of 1.5 mm, by sputtering. Then, an $Si_3N_4$ antioxide film was overcoated on each structure by sputtering to a thickness of 1,000 Å, and the obtained samples were exposed in a temperature/humidity regulator chamber at 70°C and 85%R.H. for 100 hours. Fig. 5A shows the Tb-Co film, Fig. 5B shows the Tb-($Fe_{80}Co_{20}$) film and Fig. 5C shows the Tb-Fe film. As is apparent from Figs. 5A to 5C, while the sample using the Tb-Co film exhibits no change, in the samples using the Tb-($Fe_{80}Co_{20}$) and Tb-Fe films, oxidation of the films progresses considerably from portions of the edges at which the $Si_3N_4$ overcoat film is insufficiently adhered. Therefore, in order to realize a longlife recording film on a large-sized substrate using an RE-TM film containing Fe as a major component of TM, a stable antioxide film with no pinholes must be formed. When a practical, desirable optical disc on which recording/reproduction light beams are radiated, and which uses a resin material as a substrate is manufactured, a stable antioxide film, free of pinholes and having excellent optical characteristics, must be sandwiched between the RE-TM film using Fe and the substrate. It is, however, impossible to realize such a film.

Test Example 2

In Test Example 2, the Tb-Co film judged in Test Example 1 to be the RE-TM film which can best achieve a practical lifetime, and a Tb-($Fe_{<50}Co_{>50}$) film are used. Superiority of the Tb-Co film of the present invention with respect to the Tb-($Fe_{<50}Co_{>50}$) film, will be made clear in the following description. The superiority relates to other than longevity.

The samples used in Fig. 6 were formed in the following manner. 1,000Å thick Tb-Co, Tb-($Fe_{50}Co_{50}$) and Tb-($Fe_{20}Co_{80}$) films were formed by sputtering on Si substrates on which a native oxide film is formed, and, subsequently, $Si_3N_4$ antioxide films were overcoated thereon as protective layers by sputtering. These samples were located in an electrical magnet having a maximum magnetic field strength of 10 kOe (1 Oe = $(1/4\pi) \times 10^3$ A/m) , while being held in sample holders which could be heated to 350°C. Then, a laser beam from an He-Ne laser was linearly polarized by a polarizer (a Glan-Thompson prism). The polarized laser beam was radiated on the samples from the film side surfaces thereof to measure the Kerr hysteresis loop of the reflected light beam through an analyser (a Glan-Thompson prism). Then, film temperatures at which coercive forces of the three RE-TM films become 1 kOe or lower were derived from the above result, and are shown in Fig. 6.

In order to realize record/erase with high sensitivity by a semiconductor laser, the coercive force of the RE-TM film must be several hundreds of 0e or lower, as can be supplied by a small record/erase auxiliary magnet at a temperature of several hundreds of degrees. For example, a film temperature at which a coercive force is decreased below 1 kOe or lower is one standard for recording sensitivity, and the lower the corresponding temperature the better the sensitivity. As is apparent from Fig. 6, the Tb-($Fe_{50}Co_{50}$) and Tb-($Fe_{20}Co_{80}$) films have a higher record/erase temperature than the Tb-Co film according to the present invention; therefore, the advantage of the Tb-Co film is obvious. Furthermore, from the viewpoint of difficulty in manufacturing a ternary alloy as compared to a binary alloy, the Tb-Co film using Co as TM is favorable.

Test Example 3

In Test Example 3, characteristics of several types of RE-TM films using Co as TM are compared with each other. The Tb-Co film of the present invention, and the Gd-Co and ($Gd_{80}Tb_{20}$)-Co films according to the prior art are used. In this test, superiority of the Tb-Co film according to the present invention will be revealed.

In this test, samples used are obtained such that 1,000Å thick Tb-Co, Gd-Co, and ($Gd_{80}Tb_{20}$)-Co films are formed on Si substrates by sputtering. Fig. 7 shows the relationship between the results of composition analysis obtained by ICP (Inductry Coupled Argon Plasma Emission) spectroscopy measurement and a coercive force Hc derived from measurement results of Kerr hysteresis loops of the samples at a normal temperature. Is this test the Tb-Co film was formed by the non-biased sputtering method. Since it is difficult to form Gd-Co and ($Gd_{80}Tb_{20}$)-Co films as perpendicular magnetic films by the non-biased sputtering method, they were formed by a biased sputtering method in which a bias voltage of -150 V was applied to the substrate.

The RE-TM film must exhibit a large coercive force Ðof several kOe or higher at a normal temperature in view of the stability of small bits. As can be seen from Fig. 7, when Tb-Co is used, it is possible to obtain a perpendicular magnetic film having a coercive force of 2 kOe or higher over a wide range of the Tb content of 13 at.% to 30 at.%. Conversely, when ($Gd_{80}Tb_{20}$)-Co is used, it is possible to obtain a perpendicular magnetic film having a coercive force of 2 kOe or higher only within a narrow range of + 1.5 at.% around the compensation composition of the ($Gd_{80}Tb_{20}$) content, i.e., about 23.5 at.%. Furthermore, when Gd-Co is used, if the Gd content is shifted from about 25 at.% as the compensation composition, it is impossible to obtain a coercive force sufficient for practical use. Therefore, in the conventional Gd-Co and ($Gd_{80}Tb_{20}$)-Co films, the very narrow range of the composition ratio of the rare-earth element is allowable within which a small recording bit can be reliably presented. Thus, in order to obtain a uniform composition over a large area, composition control must be precisely performed.

Another problem with respect to the Gd-Co film and the (GdTb)-Co film (the Tb ratio in RE is 30 at.% or lower) is that a perpendicular magnetic film cannot be obtained if the biased sputtering method (a substrate biased voltage normally falls within the range of -100 V to -200 V) is not adopted. Therefore, when an acrylic resin substrate which is advantageous in terms of cost and easy formation of a tracking guide groove is used in a magneto-optical disc, the substrate cannot withstand the heat load applied during the biased sputtering film forming process.

Paying due attention to the above-mentioned facts and the fact that a binary alloy is more easily formed than a ternary alloy, Tb should, preferably, be used as the rare-earth element contained in the RE-TM film, as in the present invention.

The comparative test results of the Tb-Co film of the present invention and the conventional RE-TM films have been described in detail in Test Examples 1, 2 and 3. In conclusion, the Tb-Co film of the present invention has the following advantages: (a) it overcomes the short memory lifetime that is a serious drawback of the RE-TM film containing Fe as the major component of TM; (b) it achieves a high sensitivity as compared to the magnetooptical disc having a Tb-Fe-Co film containing Co as a major component and Fe as TM; and (c) it overcomes the difficulty of achieving uniformity of composition over a large area that so plagued the magneto-optical disc having, as its recording layer, the convertional RE-TM film, i.e., Gd-Co or Gd-Tb-Co film. In particular, since the Tb-Co film of the present invention can be formed by the non-biased sputtering method, a resin material, advantageous in terms of cost, can be used as a substrate material for a magneto-optical disc.

In the following test examples, a magneto-optical disc having the Tb-Co film as a recording layer, and, more specifically, the composition and film thickness of the recording layer, and an optimum structure of such a disc will be described with reference to results of the tests conducted by the present inventors.

Test Example 4

A Tb-Co film in which a ratio of Tb was higher than a compensation composition of about 21 at.%

(to be referred to as a Tb rich film hereinafter), and a Tb-Co film in which the ratio of Tb was lower than the compensation composition (to be referred to as a Co rich film hereinafter) were formed on Si substrates with native-oxide films to a thickness of 1,000Å by sputtering. $Si_3N_4$ antioxide films were overcoated on the resultant structures to a thickness of 1,000Å by sputtering, thus providing samples. Fig. 8 shows the relationship between a coercive force and a film temperature derived from measurement results of film temperature characteristics of a Kerr hysteresis loop. It should be noted that the measurement method of the Kerr hysteresis loop is the same as in Test Example 2. Fig. 8 also shows schematic curves of the Kerr hysteresis loop at the respective film temperatures. As shown in Fig. 8, in the case of a Tb rich film, even if the film temperature exceeds 300° C, the loop exhibits a good rectangular shape. Magnetization reversal occurs abruptly with respect to an external magnetic field H (= Hc) that corresponds to the abscissa of the Kerr hysteresis loop.

In contrast, in the case of a Co rich film, the loop exhibits a poor rectangular shape when the film temperature exceeds 100° C, magnetization reversal occurs slowly with respect to the external magnetic field, and perpendicular magnetic anisotropy is lost at a film temperature of 200° C or higher. In order to clearly demonstrate such states, in the Kerr hysteresis loop of Fig. 8, the external magnetic field in which the Kerr rotation angle $\Theta k$ becomes 0 is given by a coercive force Hc, and the external magnetic field required for saturating the Kerr rotation angle $\Theta k$ is given by HR. Hc ≒ HR can be ideally achieved in the Tb rich film, but Hc < HR is given at high temperatures in the Co rich film. As can be understood from this, the magnetization reversal mechanism is unstable in the Co rich film.

Fig. 9 shows the relationship between the coercive force Hc ( ≒HR) of the Tb rich film and the film temperature. The composition is varied in the Tb rich film. As is apparent from Fig. 9, as the composition ratio of Tb increases, the film temperature at which Hc equals 1 k0e also increases. In other words, it can be said that the recording sensitivity is degraded as the composition ratio of Tb increases.

Static evaluation has been described above. In order to examine the dynamic characteristics, Tb-Co films of a variety of compositions were formed on acrylic substrates having a diameter of 200 mm and a thickness of 1.5 mm. More specifically, nine $Tb_xCo_{100-x}$ films in which the ratio X of Tb was set at 15 at.%, 17 at.%, 19 at.%, 21 at.%, 23 at.%, 25 at.%, 27 at.%, 29 at.% and 31 at.%, respectively, were formed to a thickness of 1,000Å by sputtering, and $Si_3N_4$ antioxide films were overcoated thereon by sputtering. These magneto-optical discs were set in a disc evaluation apparatus having a semiconductor laser of a wavelength of 830 nm as a light source. Formation of recording bits was attempted under conditions wherein the power of laser beams on the film surface was set at from 3 mW to 5 mW; an auxiliary magnetic field strength for record/erase at from 300 0e to 900 0e on the film surface; a disc rotational speed at 4 m/sec; a recording frequency at 1 MHz; and a laser beam spot diameter at about 1.5 µm.

After forming bits, shapes of the bits were observed by a polarizing microscope. As a result, in the discs of X = 15 at.%, 17 at.% and 19 at.%, it was observed that magnetization reversal bits considerably larger than the spot size of the laser beam, and having a blurred edge were irregularly arranged. A nonreversed portion existed in spite of laser beam radiation. Thus, it became clear from the dynamic evaluation that the Co rich film cannot provide good magnetization reversal bits. On the other hand, in the discs of X = 23 at.%, 25 at.%, 27 at.%, and 29 at.%, it was observed that magnetization reversal bits having substantially the same circular shape as that of the beam spot were stably arranged. The disc of X = 23 at.% had the bit shape most similar to the beam spot of the laser beam (slightly smaller than the spot size). The magnetization reversal bits became smaller as X increased. Thus, it became clear from the dynamic evaluation that the recording sensitivity deteriorated in accordance with an increase in X. Since the coercive force at normal temperature in the disc of X = 21 at.% is higher than the maximum magnetic field 12 ≒k0e which could be generated by the magnetizing apparatus for initialization, used by the present inventors, the disc could not be magnetized. However, when the recording bits were formed on a remaining maze magnetic domain pattern, the bit shape was good and it was found that it could be used in practical application if the magnetic field of the magnetizing apparatus for initialization was sufficiently strong.

In the disc of X = 31 at.%, bits could not be formed under the conditions where the power of the laser beam was 5 mW and the recording magnetic field was 900 0e. That is, it was found that since the disc of X = 31 at.% had too high a recording threshold value, it could not be applied practically.

As evident from the results of Test Example 4, in order to form magnetization reversal bits by radiation of low-power laser beams from a semiconductor laser and through application of an auxiliary magnetic field of several hundreds of 0e, the ratio of Tb contained in the Tb-Co film must fall within a range between 21 at.% and 30 at.%.

Test Example 5

Even when the composition ratio of Tb falls within a range of 21 at.% to 30 at.%, if the Tb-Co film has a thickness of 1,000 Å, the size of the recording bit will be smaller than the spot size of the recording laser beam, as described in Test Example 4. A reproducing laser beam spot size is normally the same as that of the recording laser beam. Therefore, if the size of the recording bit is small, the C/N (Carrier to Noise ratio) in reproduction will be degraded.

In order to have equal beam and bit size, the present inventors attempted to decrease the thickness of a $Tb_xCo_{100-x}$ film (21 at.% ≦ X ≦ 30 at.%), and to increase the spot temperature of the recording film on which the recording laser beam was radiated. The basic results of tests conducted prior to the recording test by the present inventors will be described.

$Tb_xCo_{100-x}$ films having a composition of X = 25 at.% were formed by sputtering on glass substrates to a thicknesses of 50 Å, 100 Å, 200 Å, 300 Å, 500Å and 800 Å. Then, a reflectivity from the substrate surfaces of the samples, a transmittance, and the relationship between a Kerr rotation angle and the film thickness at a normal temperature were measured by a Cary 17. Fig. 10 shows these results. Among these values, since the reflectivity and the Kerr rotation angle are directly related to the C/N of a reproduction signal, they are preferably as large as possible. However, as is apparent from Fig. 10, the reflectivity and the Kerr rotation angle are considerably decreased when the film thickness is 500Å or less. Furthermore, when the film thickness is 50 Å, a Tb-Co film with good reproducibility cannot be formed, as can be seen from the long error bar of the Kerr rotation angle. This is common to all the RE-TM films. Magneto-optical characteristics of the Tb-Co film are sensitive to the surface condition of the underlying layer. Therefore, if the film thickness is small, the characteristics will be easily influenced by the interface with the underlying layer.

$Tb_xCo_{100-x}$ films having various film thicknesses and compositions were formed by sputtering on acrylic discs which have a diameter of 200 mm and a thickness of 1.5 mm and are provided with a tracking guide groove (to be referred to as a track hereinafter) for guiding an optical head, and $Si_3N_4$ films were overcoated thereon by sputtering, thus manufacturing magneto-optical discs. Then, the record/reproduction/erase test was conducted by the same disc evaluation apparatus used in Test Example 4. Recording characteristics were evaluated by recording threshold power when the recording auxiliary magnetic field was fixed at 400 0e, and by observation of the shape of the magnetization reversal bit by a polarizing microscope. The recording threshold power is defined by the power of the recording laser beams when a diameter of the recording bit exceeds 1.5 µm. Reproduction characteristics were evaluated from the reproduction peak strength of a main signal when a semiconductor laser beam having a power of 1.5 mW on the film surface and a wavelength of 830 nm was continuously radiated on the track. Note that the linear speed of the beam (relative speed between the beam and the disc) was set at 4 m/sec, and the auxiliary magnetic field used in reproduction was set at 0 0e. Erase characteristics were evaluated from the reproduction peak strength of the main signal when the reproduction test was performed at the same portion after erasing, and from observation of the erased disc by a polarizing microscope. Note that a laser beam having a power of 5 mW on the film surface and a wavelength of 830 nm was continuously radiated on the track of the recording bit array at a linear speed of 4 m/sec, and, at the same time, that an erase auxiliary magnetic field of 400 0e was applied in the direction opposite to that used in recording.

The above-mentioned evaluation of the dynamic characteristic was made in such a manner that X in $Tb_xCo_{100-x}$ took four values within a range between 21 at.% and 30 at.%, and the film thickness of the Tb-Co film took four values within a range between 100Å to 800 Å. The recording/erase characteristics were good over the composition range of 21 at.% ≦ X ≦ 30 at.% when the film thickness of the $Tb_xCo_{100-x}$ film was 400Å or less. The reproduction characteristics improved as the film thickness increased in the film thickness range of 400Å or less. When the film thickness was 50 Å, the reproduction signal was originally unstable, and this corresponded to the basic test results in which reflectivity was examined by varying the film thickness. When the film thickness exceeded 500 Å, the reproduction signal peak decreased, particularly when X was large. This is because the diameter of the magnetization reversal bit becomes smaller than the spot size of the recording laser beam (= spot size of the reproduction laser beam). Note that due to performance of the magnetizing apparatus for initialization the reproduction characteristics in the sample of X = 21 at.% were not evaluated for the same reason as described in Test Example 4.

As can be seen from the results of Test Example 5, the film thickness of a recording layer made of the Tb-Co film according to the present invention preferably falls within a range between 100Å and 400 Å.

Test Example 6

From the test results (Test Examples 4 and 5) of the magneto-optical disc in which the Tb-Co film, as the recording layer, is formed directly on the substrate, and the transparent $Si_3N_4$ film is formed on the Tb-Co film, X of the $Tb_xCo_{100-x}$ film preferably falls within the range between 21 at.% and 30 at.%, and the film thickness of the Tb-Co film preferably falls within the range between 100Å and 400 Å. As described in Test Example 5, the recording/erase characteristics can be improved by controlling the film thickness; however, a slight difficulty remains with the reproduction characteristics. In Test Example 6, a magneto-optical disc structure is optimized in order to resolve the problem.

In the conventional magneto-optical disc using the RE-TM film as a recording layer, an interference multilayer is stacked on the RE-TM film so as to improve the C/N of the reproduction signal. The Kerr rotation angle θk is seemingly increased by the interference multilayer. When the film structure is optimized, the Kerr rotation angle θk becomes three or four times larger than that in the case wherein only the RE-TM film is formed. This detail is disclosed in Tanaka et al, "Amorphous TbFe Ultra Thin Film with Reflective Au layer", Journal of Magnetism and Magnetic Materials 35 (1983) pp.173 - 174. The reproduction C/N is proportional to a product of the reflectivity R on the film surface of the disc, the Kerr rotation angle θk and the power Io of the reproduction laser beam. When a PIN diode is used as a reproduction photo detector, the relation can be written as:

$C/N \propto Io \cdot R \cdot \theta k$ ...(1)

When the interference multilayer is provided, the Kerr rotation angle θk in equation (1) is greatly increased. However, an apparent increase in the Kerr rotation angle θk due to the structure with the interference multilayer inevitably causes R in equation (1) to decrease. Therefore, in order to directly reflect, in an increase in the reproduction C/N, an enhancement effect of the Kerr rotation angle θk due to the interference multilayer, the power Io of the reproduction laser beam is preferably set at high. However, in the conventional magneto-optical disc having, as its recording layer, the RE-TM film containing, e.g., Fe as the major component, when the power of the reproduction laser beam is set high, the Kerr rotation angle θk is greatly decreased due to an increase in film temperature at the time of reproduction. Therefore, even if an interference multilayer were provided, an improvement in the reproduction C/N could not be expected.

Fig. 11 shows the relationship between the film temperature and the Kerr rotation angle of the Tb-Co film according to the present invention, in comparison with conventional Tb-Fe and Tb-$(Fe_{85}Co_{15})$ films. Samples were obtained in such a manner that the RE-TM films were formed by sputtering on Si substrates with thermal oxide films to a thickness of 1,000 Å, protective layers comprising $Si_3N_4$ films being formed on the RE-TM films by sputtering. Fig. 11 shows the results of temperature characteristics of the Kerr hysteresis loop of the samples measured by the same method as in Test Example 2. As is apparent from Fig. 11, even if the film temperature is increased, a decrease in the Kerr rotation angle of the Tb-Co film according to the present invention is very small as compared to the conventional Tb-Fe and Tb-$(Fe_{85}Co_{15})$ films. Therefore, it is found that an improvement in the reproduction C/N can be effectively achieved by a structure with an interference multilayer.

Based upon the above findings, a magneto-optical disc was manufactured in such a manner that an $Si_3N_4$ sputtered film 12 having a transmittance of about 95% at a wavelength of 830 nm and a refractive index of about 1.9 was formed to a thickness of 1,100Å on an acrylic substrate having a diameter of 200 mm and a thickness of 1.5 mm, a 250Å thick Tb-Co film having a Tb content of 25 at.% was formed on the $Si_3N_4$ sputter film, and another $Si_3N_4$ sputter film was formed as a protective layer of a thickness of up to approximately 1,000Å on the Tb-Co film. The dynamic characteristics of the obtained disc were evaluated. Recording conditions were set such that the power of the laser beam was 5 mW on the film, the recording magnetic field strength was 400 Oe, and the disc rotational speed was 4 m sec. Under five reproduction conditions in which the power of the laser beam was set at 0.5 mW, 1 mW, 1.5 mW, 2 mW and 2.5 mW, the reproduction signal peak strength was exam-ined. When the power of the reproduction laser beam was 1 mW, the peak strength was increased 2.5 times that of a disc with no interference layer (the $Si_3N_4$ film between the substrate and the Tb-Co film) under the same condition. Simultaneously, the peak strength was increased in proportion to the power of the reproduction laser beam. Thus, it was confirmed that Tb-Co film is an excellent recording layer material, serving to enhance the effect of an interference multilayer.

In order to further increase the reproduction signal strength by effectively utilizing the reproduction laser beam, a magneto-optical disc with the fourlayered structure of Fig. 1 was manufactured. Note that the relationship between the film thickness of the Tb-Co film and the transmittance is as shown in Fig. 10.

The substrate 10 shown in Fig. 1 is an acrylic plate having a diameter of 200 mm, a thickness of 1.5 mm and a guide groove. The first and second interference films 12 and 16 are $Si_3N_4$ sputtered films having a film thickness of 1,100 Å, a light

transmittance of about 95% at a wavelength of 830 nm, and a refractive index of about 1.9. The recording layer 14 is a Tb-Co sputter film having a film thickness of 250Å and a Tb ratio of 25 at.%. Furthermore, the light reflection film 18 is an Aℓ film having a film thickness of 600 Å. The magneto-optical disc with the above structure was subjected to evaluation of its dynamic characteristics. The recording bit array was formed under conditions of power of the recording laser beam of 5 mW, a recording magnetic field strength of 400 0e, a disc rotational speed of 4 m/sec, a recording frequency of 1 MHz, and a laser beam spot size of 1.5 μm. Thereafter, when a 1 mW reproduction laser beam was continuously radiated so as to perform reproduction, the reproduction signal strength was increased about 1.5 times that of a magneto-optical disc with a three-layered structure (having no Aℓ reflection layer), and greatly exceeded the required C/N (e.g., 50 dB at 1 MHz).

As the reflection layer 18, Ag, Cu, Au and Ni films were used in place of the Aℓ film; all were subjected to the same tests as described above. In the Ag, Cu and Au films having a light reflectivity of 80% or higher at a wavelength of 830 nm, the same result as for the Aℓ layer was obtained. However, in the case of the Ni film having a light reflectivity of 80% or lower, the effect of the four-layered structure could not be observed. Therefore, it is preferable to use, as the layer 18, a material having a reflectivity of 80% or higher with respect to the wavelength of the reproduction laser beam.

As described above, in the magneto-optical disc of the present invention, having, as its recording layer, the Tb-Co film in which the Tb ratio falls within the range between 21 at.% and 30 at.% and the film thickness falls within the range between 100Å and 400 Å, the provision of the interference layers 12 and 16 for increasing the Kerr rotation angle is effective in increasing the reproduction C/N. A sufficient effect can be obtained even when only the interference layer I2 is provided between the substrate 10 and the recording layer 14. However, if the interference layer, transparent with respect to the wavelength of the recording and reproduction laser beam, and light reflection layer (both serving as the protective layers), are stacked on the Tb-Co film in order to utilize light transmitted through the recording layer 14, a still larger effect can be expected.

Five samples, each having a four-layered structure were manufactured in such a manner that $Si_3N_4$ sputter films 16 were formed as the second interference layer at film thicknesses of, i.e., 0 Å, 250 Å, 500 Å, 800 Å, 1100Å on the Tb-co film. Thereafter, the reflectivity and kerr rotation angle were statically measured from the substrate side by using an He-Ne laser. As a result, it was found that the reflectivity and kerr rotation angle were remarkably increased under the condition that the second interference layer had a thickness of 500Å or less, and, in particular, 250 Å. Therefore, it is a practical advantage to set the film thickness of the second interference layer at 500Å or less.

## Claims

1. A rewritable magneto-optical disc, in which information is written by a recording laser beam and from which the information is reproduced by a reproduction laser beam, said recording and reproduction laser beams having the same spot size, the disc comprising a substrate (10); a recording layer (14) formed on said substrate (10) and made of an amorphous alloy of rare earth transition metal elements having an axis of easy magnetization perpendicular to a substrate surface; and a protective layer (20) formed on said recording layer (14) for protection of said recording layer and comprising an interference layer (16) formed on said recording layer (14) and made of a material which is transparent with respect to the wavelength of the recording/reproduction laser beams; and a light reflection layer (18) formed on said interference layer (16); characterized in that the rare earth element in said recording layer (14) is Tb and the transition metal element therein is Co, and the content of Tb in said recording layer (14) falls within a range between 21 atomic % and 30 atomic %, in that the film thickness of said recording layer (14) falls within a range between 100Å and 400 Å, and in that the light reflection layer (18) has reflectivity of at least 80% with respect to the wavelength of the recording/reproducing laser beams.

2. A disc according to claim 1, characterized by further comprising at least one interference layer (12) provided between said substrate (10) and said recording layer (14) and made of a material which is transparent with respect to the wavelength of a recording/ reproduction laser beam.

3. A disc according to claim 1 or 2, characterized in that said substrate (10) is made of a resin material.

## Revendications

1. Disque magnéto-optique réenregistrable, dans lequel des informations sont écrites au moyen d'un faisceau laser d'enregistrement et à partir duquel les informations sont reproduites au moyen d'un faisceau laser de reproduction, les faisceaux laser d'enregistrement et de reproduction ayant la même grandeur de spot, le disque comprenant un substrat (10); une couche d'enregistrement (14) formée sur le substrat (10) et constituée d'un alliage amorphe d'éléments métalliques de transition et terres rares ayant un axe d'aimantation facile perpendiculaire à une surface de substrat; et une couche protectrice (20) formée sur la couche d'enregistrement (14) pour la protection de la couche d'enregistrement et comprenant une couche d'interférence (16) formée sur la couche d'enregistrement (14) et constituée d'un matériau qui est transparent par rapport à la longueur d'onde des faisceaux laser d'enregistrement/de reproduction; et une couche de réflexion de lumière (18) formée sur la couche d'interférence (16); caractérisé en ce que l'élément terre rare contenu dans la couche d'enregistrement (14) est Tb et l'élément métallique de transition contenu dans celle-ci est Co, et la teneur en Tb contenu dans la couche d'enregistrement (14) est comprise entre 21% d'atomes et 30% d'atomes, en ce que l'épaisseur de film de la couche d'enregistrement (14) est comprise entre 100Å et 400Å , et en ce que la couche de réflexion de lumière (18) a un coefficient de réflexion d'au moins 80% par rapport à la longueur d'onde des faisceaux laser d'enregistrement/de reproduction.

2. Disque selon la revendication 1, caractérisé en ce qu'il comprend en outre au moins une couche d'interférence (12) prévue entre le substrat (10) et la couche d'enregistrement (14) et constituée d'un matériau qui est transparent par rapport à la longueur d'onde d'un faisceau laser d'enregistrement/de reproduction.

3. Disque selon l'une quelconque des revendications 1 et 2, caractérisé en ce que le substrat (10) est constitué d'un matériau résineux.

## Ansprüche

1. Wiederbeschreibbare magneto-optische Platte, auf die Information mit Hilfe eines Aufzeichnungslaserstrahls geschrieben und von der Information mittels eines Wieder gabelaserstrahls wiedergegeben wird, wobei die Aufzeichnungs-und Wiedergabelaserstrahlen dieselbe Fleckgröße aufweisen, umfassend
ein Substrat (10);
eine auf dem Substrat (10) gebildete und aus einer amorphen Legierung von Seltenerde-Übergangsmetall-Elementen mit einer Achse leichter Magnetisierung senkrecht zu einer Substratoberfläche bestehende Aufzeichnungsschicht (14) und
eine auf der Aufzeichnungsschicht (14) zu deren Schutz gebildete Schutzschicht (20), umfassend eine auf der Aufzeichnungsschicht (14) aufliegende Interferenzschicht (16) aus einem in bezug auf die Wellenlänge der Aufzeichnungs-/Wiedergabe-Laserstrahlen transparenten Material und eine auf der Interferenzschicht (16) gebildete Lichtreflexionsschicht (18),
**dadurch gekennzeichnet**, daß
das Seltenerdeelement in der Aufzeichnungsschicht (14) aus Tb und das darin befindliche Übergangsmetallelement aus Co bestehen, der Gehalt an Tb in der Aufzeichnungsschicht (14) innerhalb eines Bereichs zwischen 21 Atom-% und 30 Atom-% liegt, die Filmdicke der Aufzeichnungsschicht (14) in einem Bereich zwischen 100Å und 400Å liegt und die Lichtreflexionsschicht (18) ein Reflexionsvermögen von mindestens 80% in bezug auf die Wellenlänge der Aufzeichnungs-Wiedergabe-Laserstrahlen aufweist.

2. Platte nach Anspruch 1, dadurch gekennzeichnet, daß sie zusätzlich zwischen dem Substrat (10) und der Aufzeichnungsschicht (14) mindestens eine Interferenzschicht (12) aus einem Material, das in bezug auf die Wellenlänge eines Aufzeichnungs-Wiedergabe-Laserstrahls transparent ist, enthält.

3. Platte nach Anspruch 1 oder 2, dadurch gekennzeichnet, daß das Substrat (10) aus einem Harzmaterial besteht.

FIG. 1

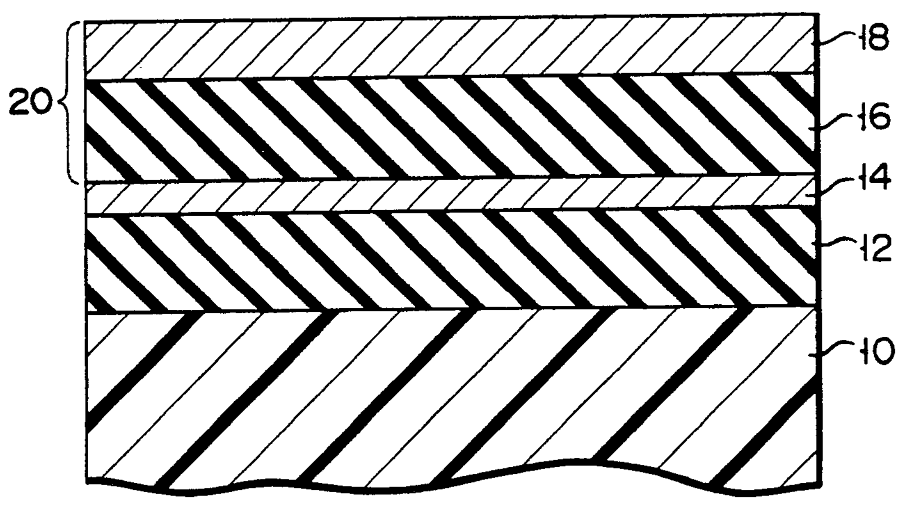

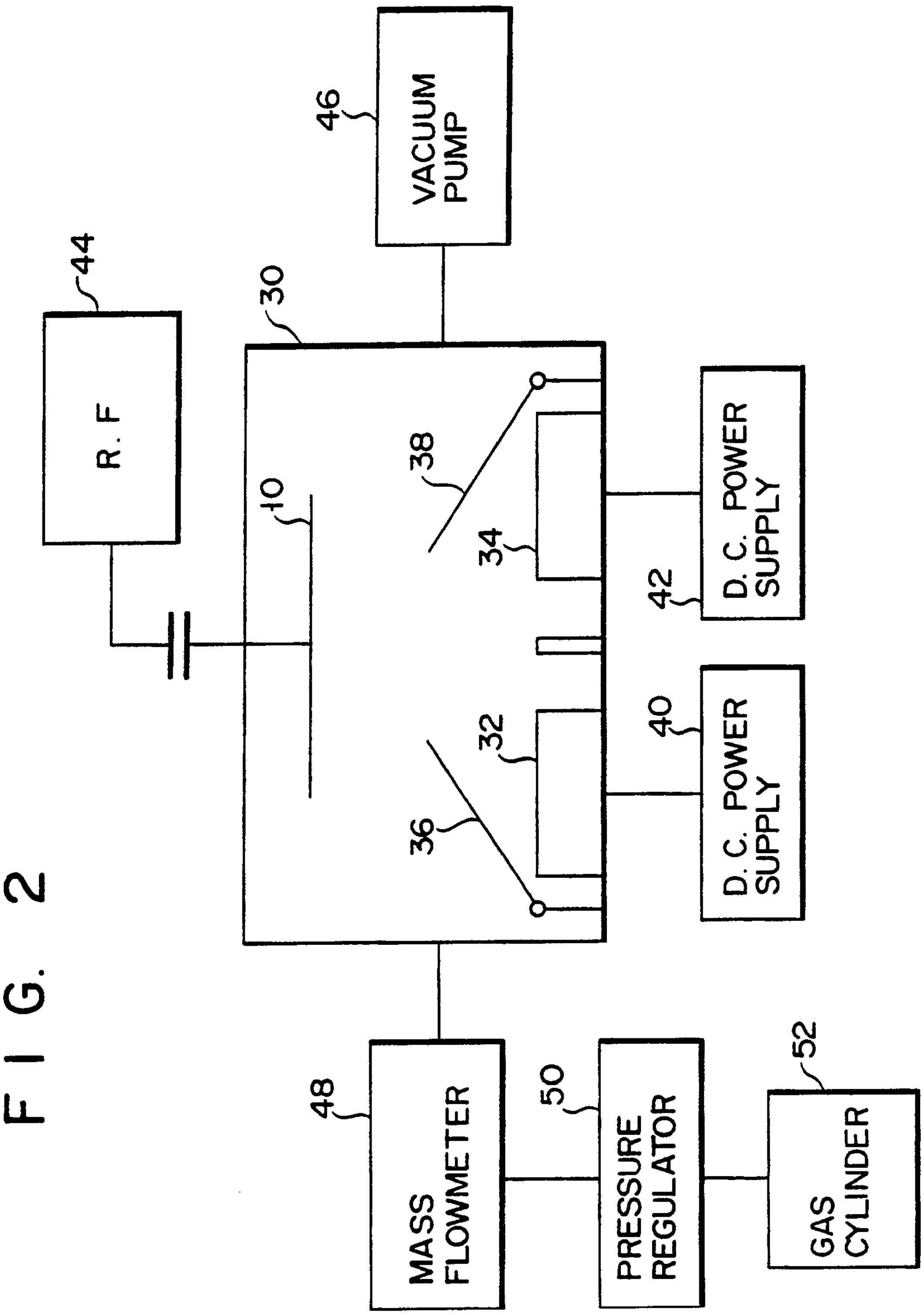
R. F
44
30
10
38
34
36
32
VACUUM PUMP
46
D. C. POWER SUPPLY
42
D. C. POWER SUPPLY
40
MASS FLOWMETER
48
PRESSURE REGULATOR
50
GAS CYLINDER
52

FIG. 2

FIG. 3

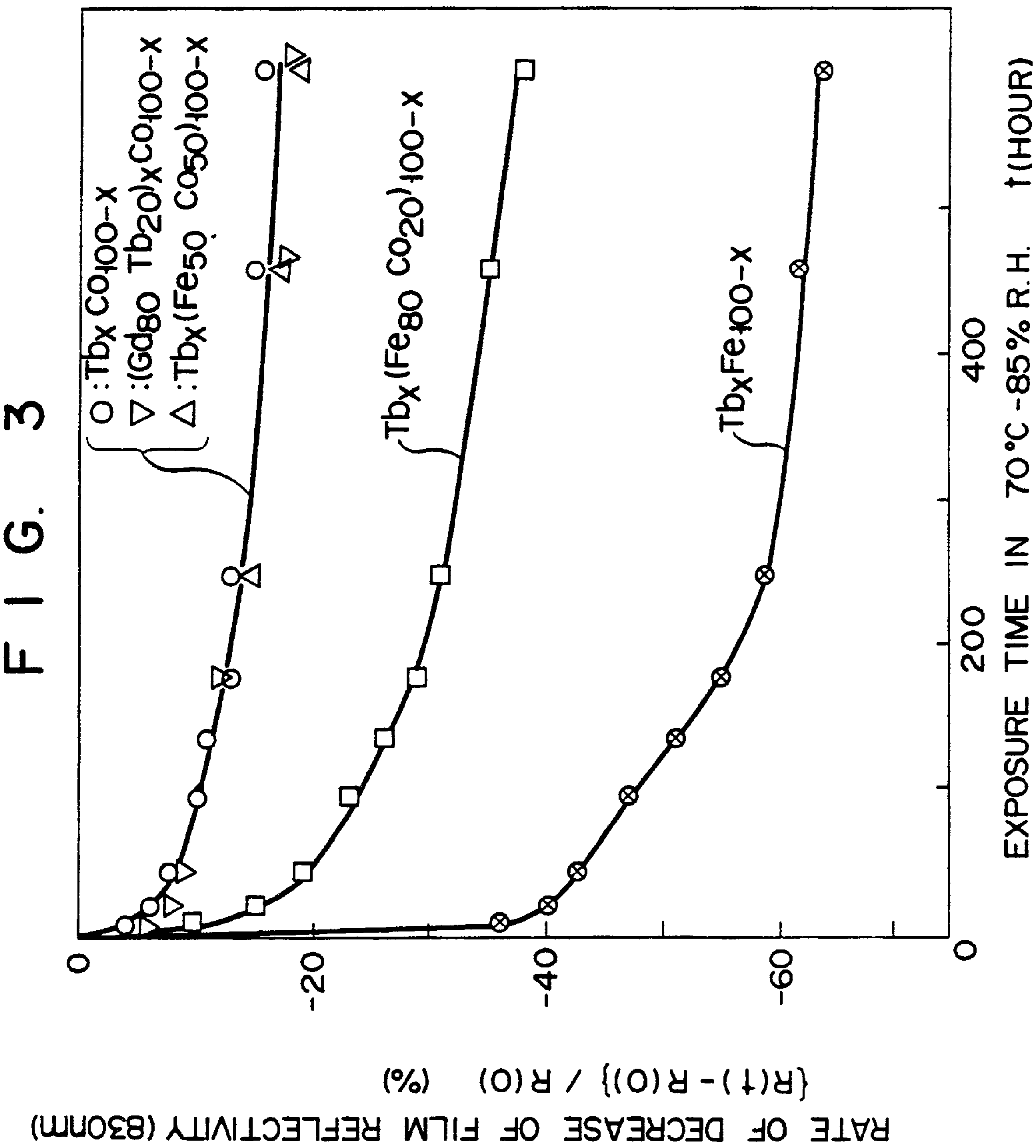
○ : $Tb_x Co_{100-x}$
▽ : $(Gd_{80} Tb_{20})_x Co_{100-x}$
△ : $Tb_x (Fe_{50} Co_{50})_{100-x}$
$Tb_x (Fe_{80} Co_{20})_{100-x}$
$Tb_x Fe_{100-x}$
0
-20
-40
-60
0
200
400
EXPOSURE TIME IN 70°C -85% R.H. t(HOUR)
RATE OF DECREASE OF FILM REFLECTIVITY (830nm)
{R(t) - R(0)} / R(0) (%)

FIG. 4

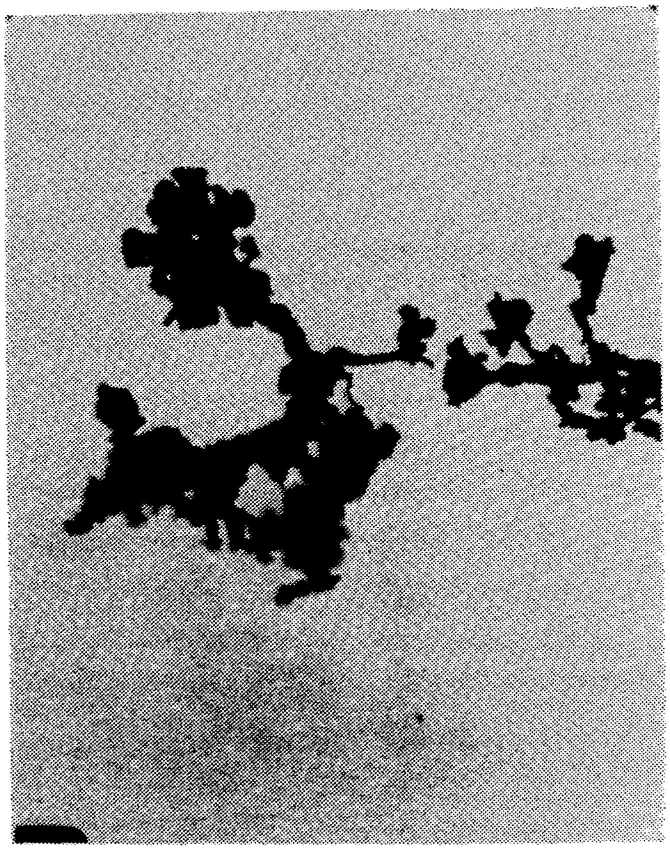

FIG. 5A

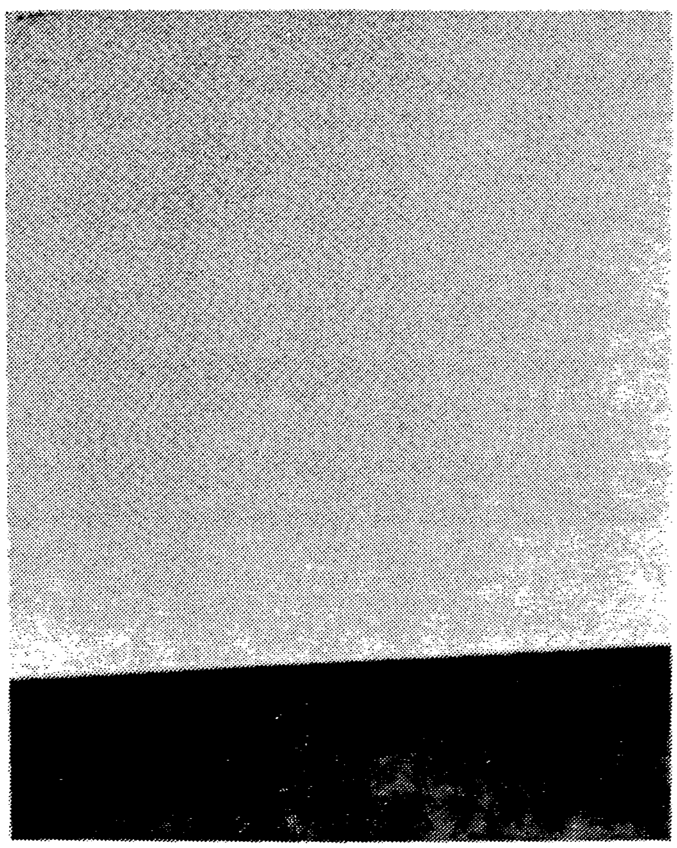

FIG. 5B

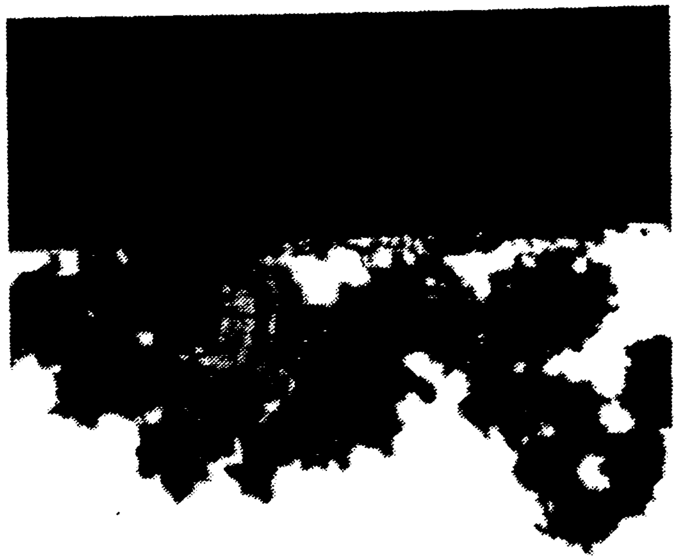

FIG. 5C

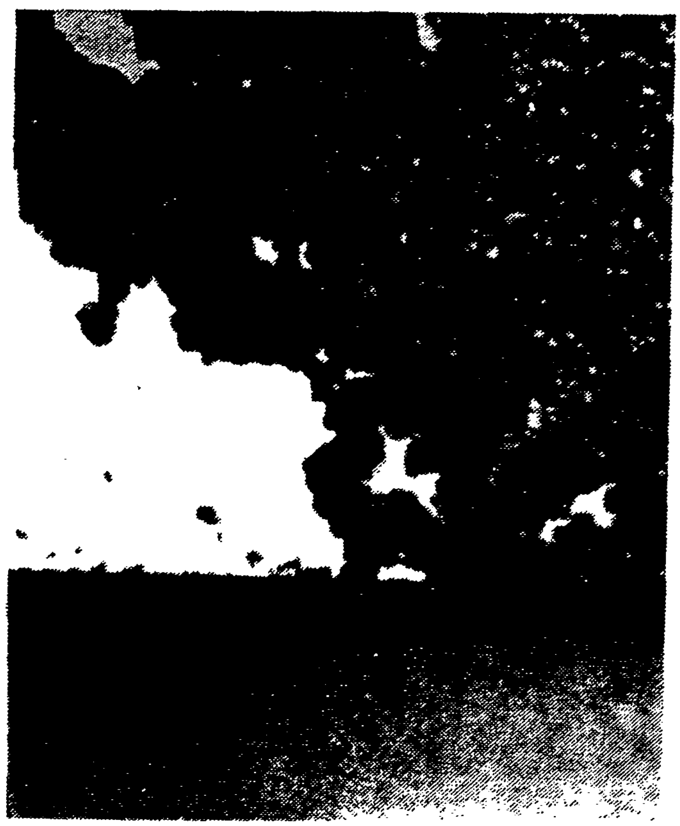

FIG. 6

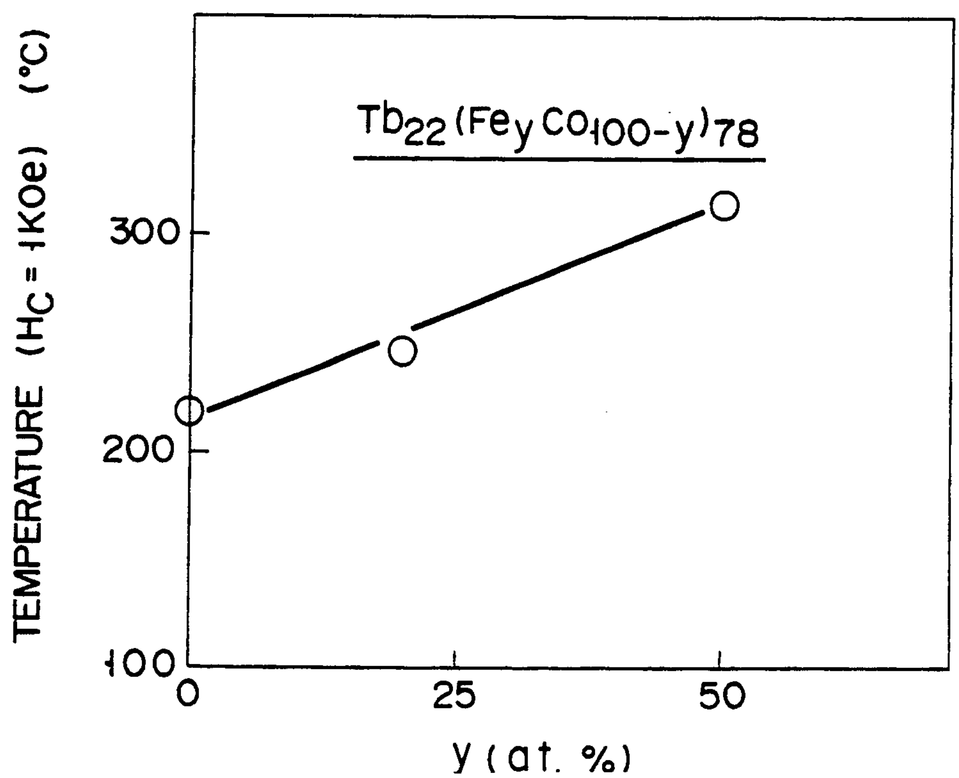
Tb22 (Fey Co100-y)78
TEMPERATURE (HC = 1KOe) (°C)
300
200
100
0
25
50
y (at. %)

FIG. 7

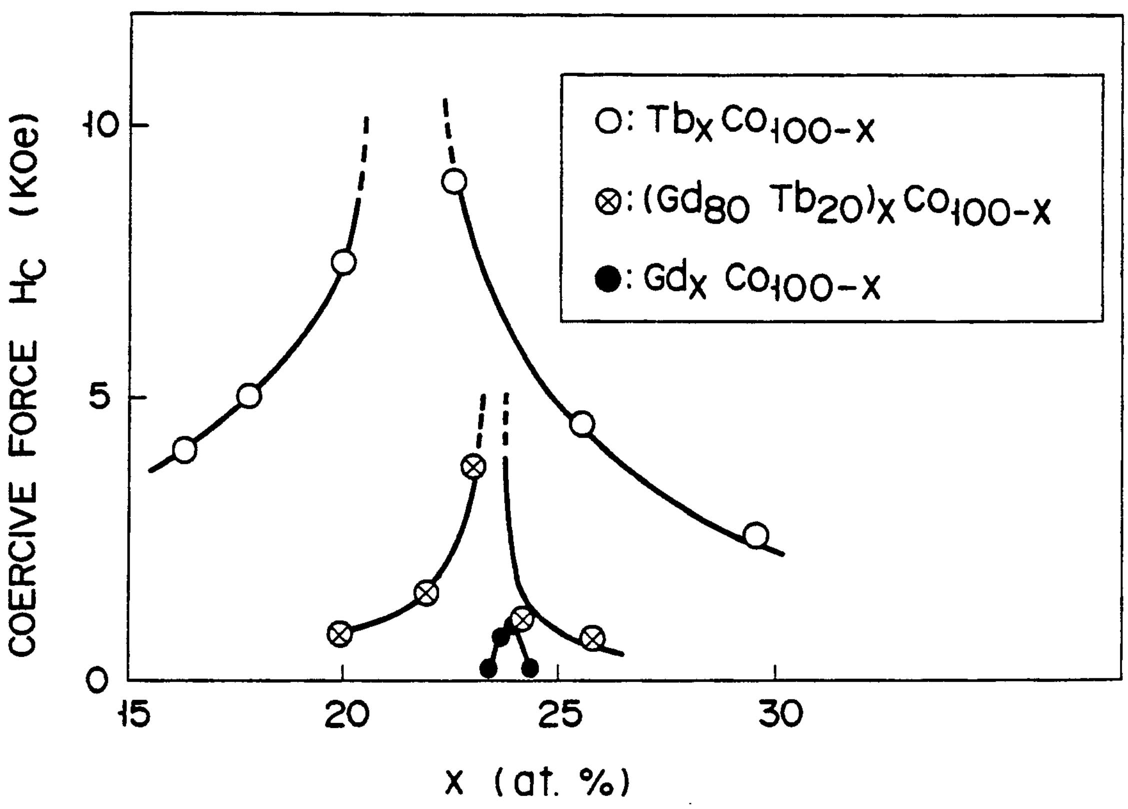
O: $Tb_x Co_{100-x}$
⊗: $(Gd_{80} Tb_{20})_x Co_{100-x}$
●: $Gd_x Co_{100-x}$
COERCIVE FORCE Hc (KOe)
10
5
0
15
20
25
30
x (at. %)

FIG. 8

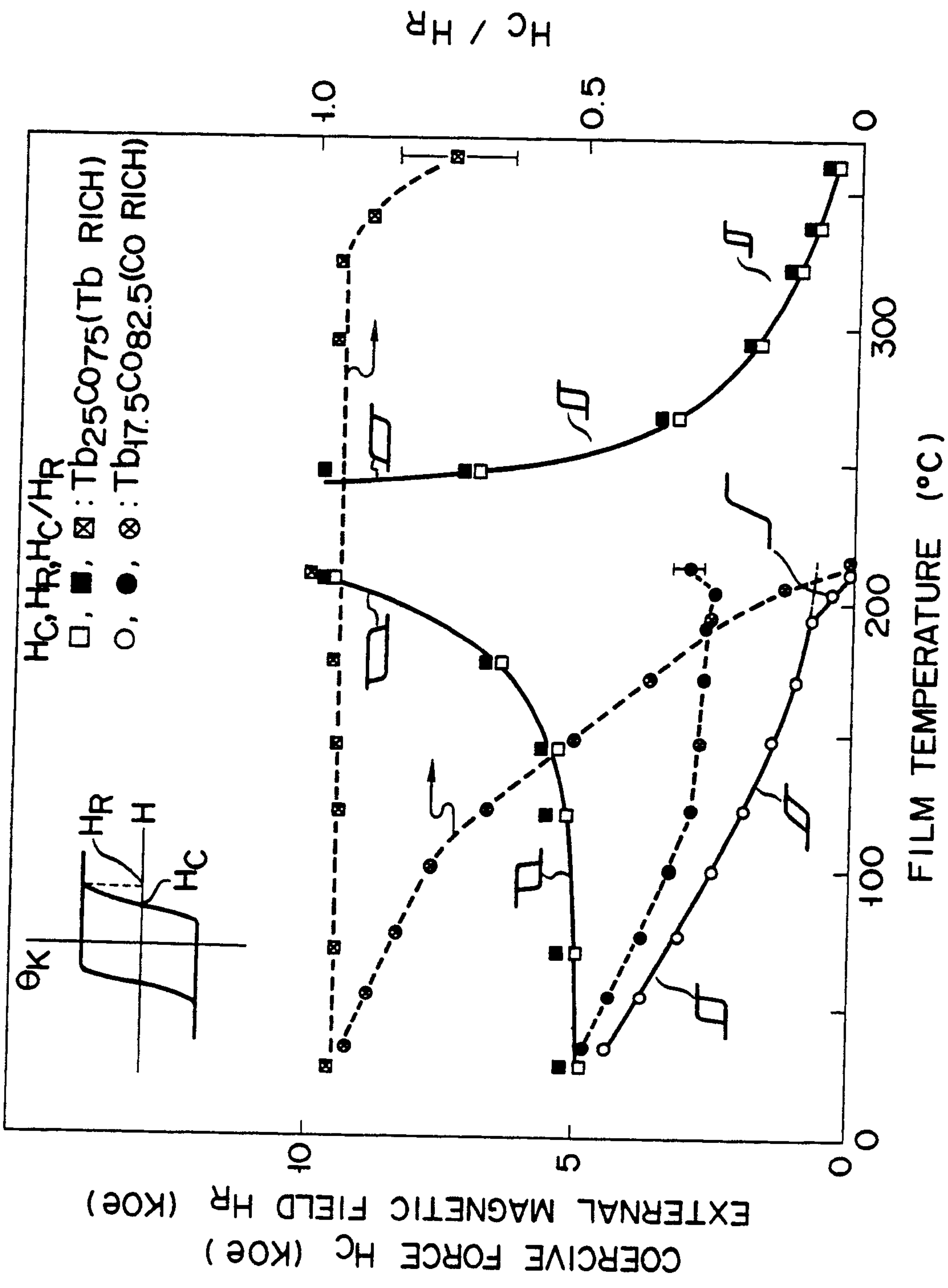

$H_C, H_R, H_C/H_R$
□, ■, ⊠ : $Tb_{25}Co_{75}$(Tb RICH)
○, ●, ⊗ : $Tb_{17.5}Co_{82.5}$(Co RICH)
$\theta_K$
$H_R$
H
$H_C$
EXTERNAL MAGNETIC FIELD $H_R$ (KOe)
COERCIVE FORCE $H_C$ (KOe)
$H_C$ / $H_R$
FILM TEMPERATURE (°C)
0
5
10
0
0.5
1.0
0
100
200
300

FIG. 9

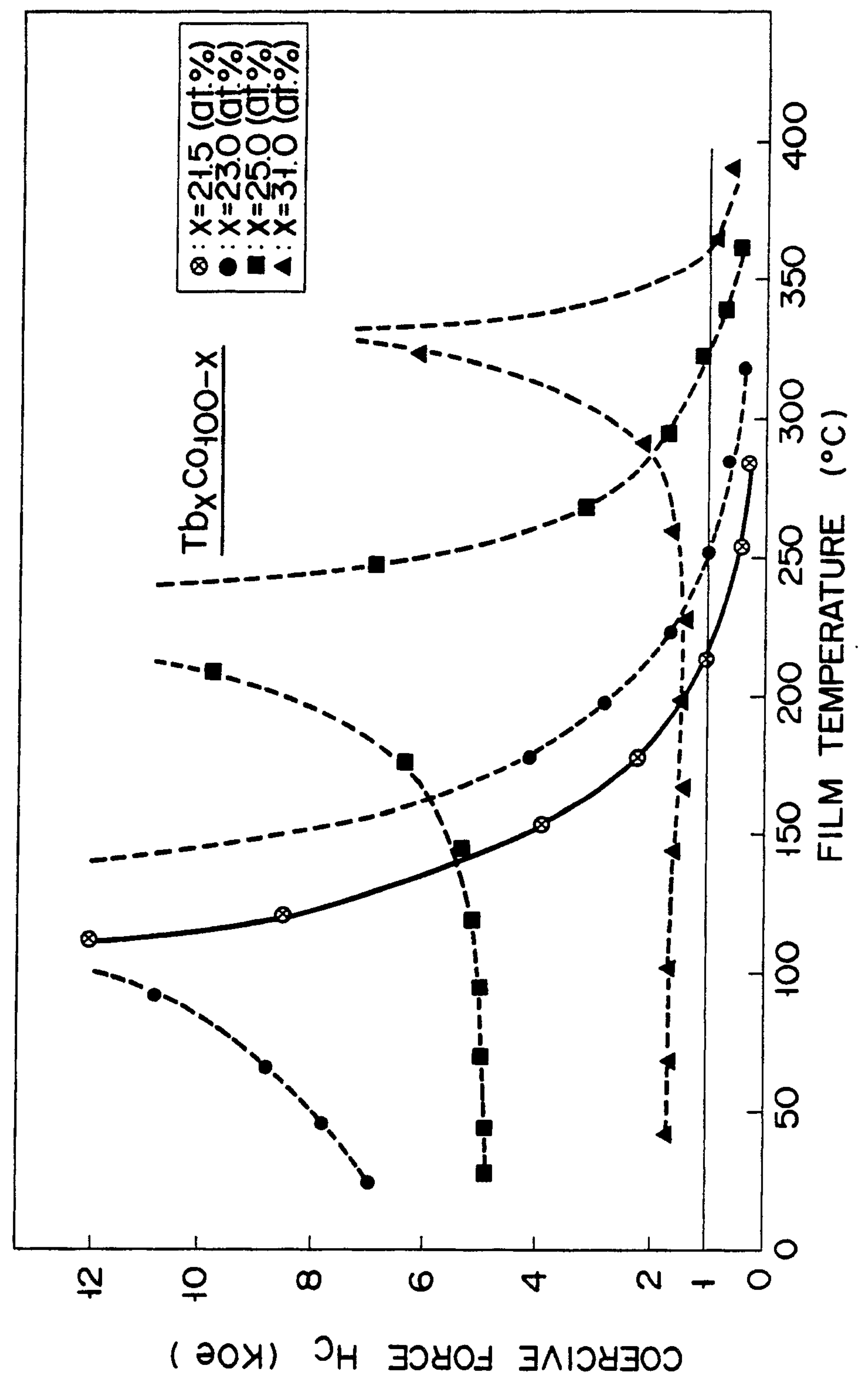

$Tb_XCo_{100-X}$
⊗ : X=21.5 (at.%)
● : X=23.0 (at.%)
■ : X=25.0 (at.%)
▲ : X=31.0 (at.%)
COERCIVE FORCE Hc (KOe)
0
1
2
4
6
8
10
12
0
50
100
150
200
250
300
350
400
FILM TEMPERATURE (°C)

# FIG. 10

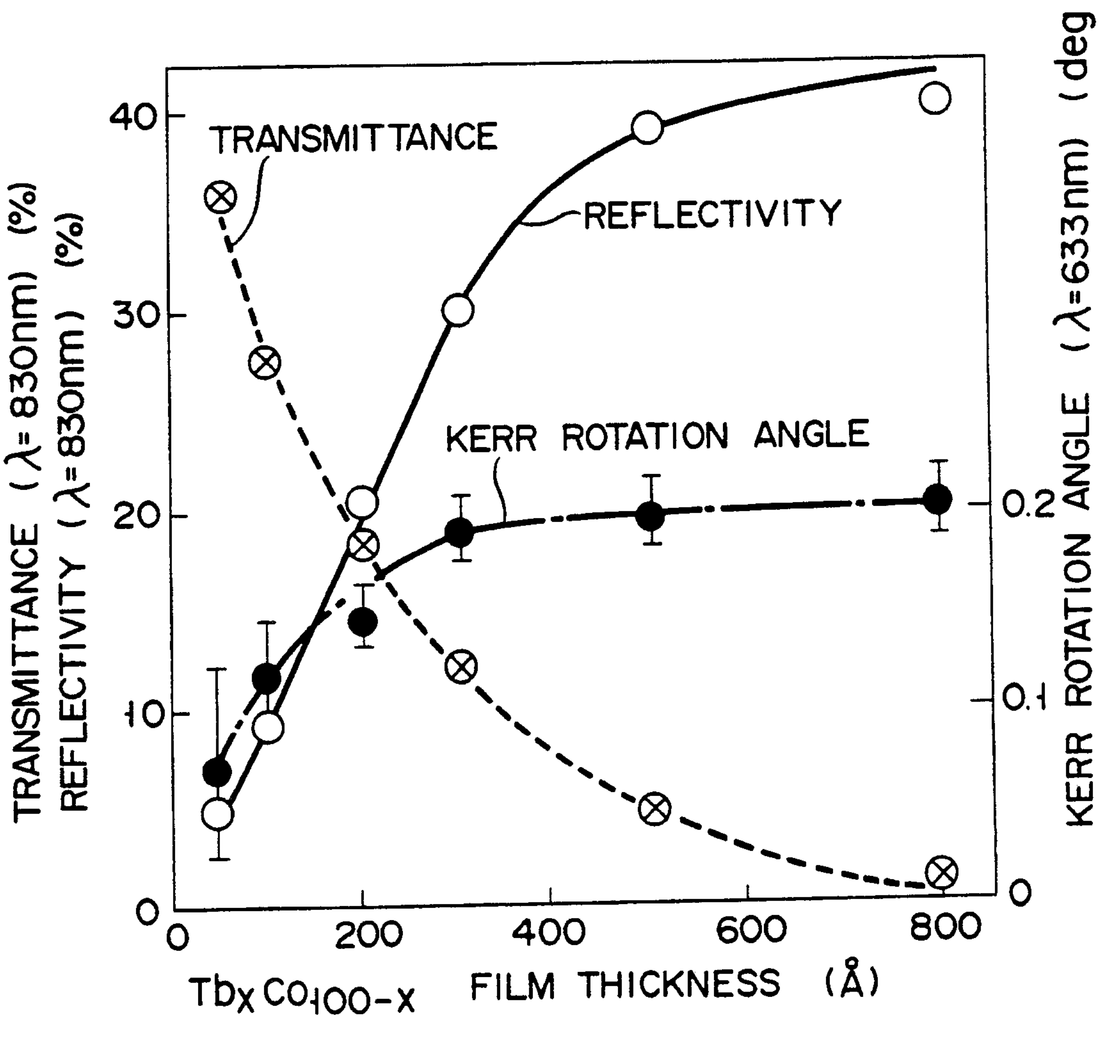
TRANSMITTANCE (λ=830nm) (%)
REFLECTIVITY (λ=830nm) (%)
KERR ROTATION ANGLE (λ=633nm) (deg)
TRANSMITTANCE
REFLECTIVITY
KERR ROTATION ANGLE
40
30
20
10
0
0.2
0.1
0
0
200
400
600
800
TbxCo100-x FILM THICKNESS (Å)

FIG. 11

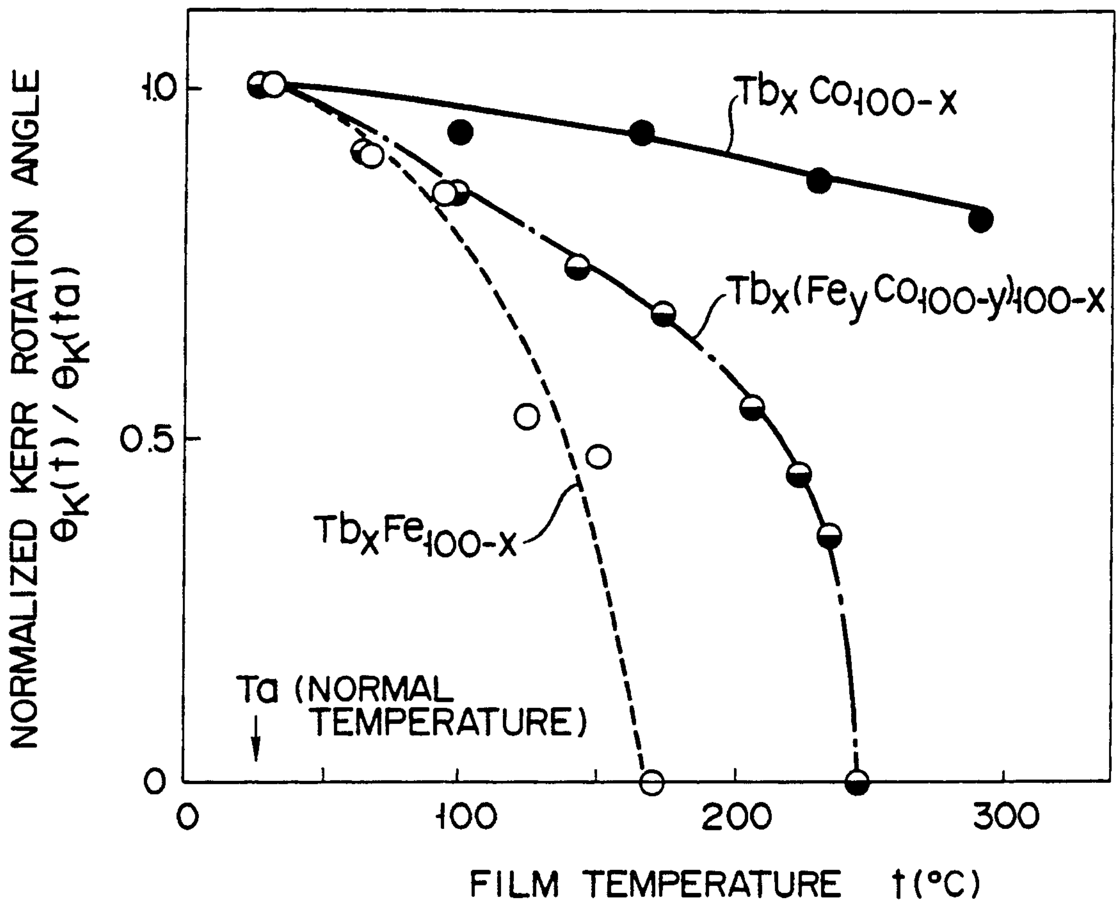
NORMALIZED KERR ROTATION ANGLE
θK(t) / θK(ta)
1.0
0.5
0
0
100
200
300
FILM TEMPERATURE t(°C)
TbX Co100-X
TbX(FeY Co100-Y)100-X
TbX Fe100-X
Ta (NORMAL TEMPERATURE)